# EUROPEAN PATENT APPLICATION

(11) **EP 4 345 993 A1**
(43) Date of publication of application: **03.04.2024**
(21) Application number: 23150848.2
(22) Date of filing: 10.01.2023
(51) Int. Cl.: H01M 50/204, H01M 50/244, H01M 50/262, H01M 50/271, H01M 10/6554

(54) **BATTERY MODULE AND BATTERY PACK**

(30) Priority: 30.09.2022 CN 202222623208 U
(71) Applicant: CALB Co., Ltd., Changzhou City, Jiangsu Province (CN)
(72) Inventor: ZHAO, Dong, Changzhou City, Jiangsu Province (CN)
(74) Representative: Becker, Eberhard

(57) **Abstract**

A battery module includes a casing (1) and a cell assembly (2). The casing (1) includes two side plates (11) opposite to each other. Each of the side plates (11) includes a side plate body (111), a protruding rib portion, and lifting lugs (113). The protruding rib portion is disposed on an outer side surface of the side plate body (111) and extends in a length direction of the side plate body (111). The protruding rib portion includes a protruding rib and a notch (114), and the protruding rib and the notch (114) are adjacent to each other in an extending direction of the protruding rib portion. The notch (114) is provided on at least one end of the protruding rib portion in the extending direction. The lifting lugs (113) are disposed on the protruding rib at intervals in the extending direction of the protruding rib portion.

## Description

### BACKGROUND

### Technical Field

The disclosure relates to the technical field of batteries, and in particular, relates to a battery module and a battery pack.

### Description of Related Art

At present, with the development of the power battery industry, the fixing of a battery module in a battery pack is achieved by mounting lifting lugs on the side plates and connecting the lifting lugs to the mounting beam. However, the above mounting and arrangement may lead to the following problems. First, the lifting lugs are arranged on the reinforcing ribs of the side plates, and the arrangement of the reinforcing ribs results in the absence of gap between the side plates and the mounting beam. When the battery module is to be disassembled from the battery pack, the disassembly tool cannot be inserted into the battery module from the side plates to lift up the battery module. Second, a liquid cooling plate is fixedly connected to the bottom of the end plate, but in order to avoid damage to the liquid cooling plate, it is not easy for the disassembly tool to lift up the battery module from the bottom of the end plate. The above brings about the problem that the battery module is difficult to be disassembled.

### SUMMARY

The disclosure provides a battery module and a battery pack.

The disclosure provides a battery module including a casing and a cell assembly disposed in the casing. The casing includes two side plates opposite to each other. Each of the side plates includes a side plate body, a protruding rib portion, and lifting lugs. The protruding rib portion is disposed on an outer side surface of the side plate body and extends in a length direction of the side plate body. The protruding rib portion includes a protruding rib and a notch, and the protruding rib and the notch are adjacent to each other in an extending direction of the protruding rib portion. The notch is provided on at least one end of the protruding rib portion in the extending direction. The lifting lugs are disposed on the protruding rib at intervals in the extending direction of the protruding rib portion.

In the disclosure, the protruding rib portion is provided with the notch. With the presence of the notch, when the battery module is mounted on a mounting beam in a battery pack, a gap is provided between the side and the mounting beam at the position of the notch. In this way, when the battery module is required to be disassembled, a disassembly tool may be inserted into the bottom portion of the battery module to lift up the battery module from the notch.

The disclosure further provides a battery pack including the abovementioned battery module.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a structural schematic view of a side plate in an embodiment.
FIG. 2 is a structural schematic view of a battery module in an embodiment.
FIG. 3 is an exploded view of the battery module in an embodiment.
FIG. 4 is a structural schematic view of hoisting the battery module in an embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.
In the context, it should also be understood that when an element or features is provided "outside" or "inside" of another element(s), it can be directly provided "outside" or "inside" of the other element, or be indirectly provided "outside" or "inside" of the another element(s) by an intermediate element.

The disclosure provides a battery module and a battery pack to solve the problems that occur when the battery module is to be disassembled from the battery pack.

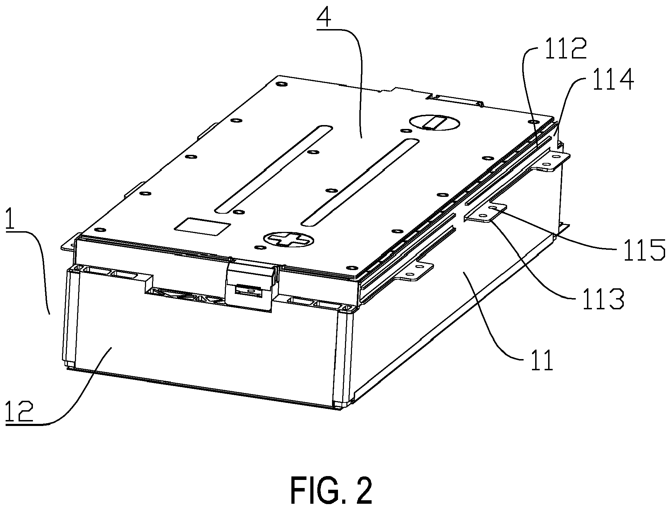

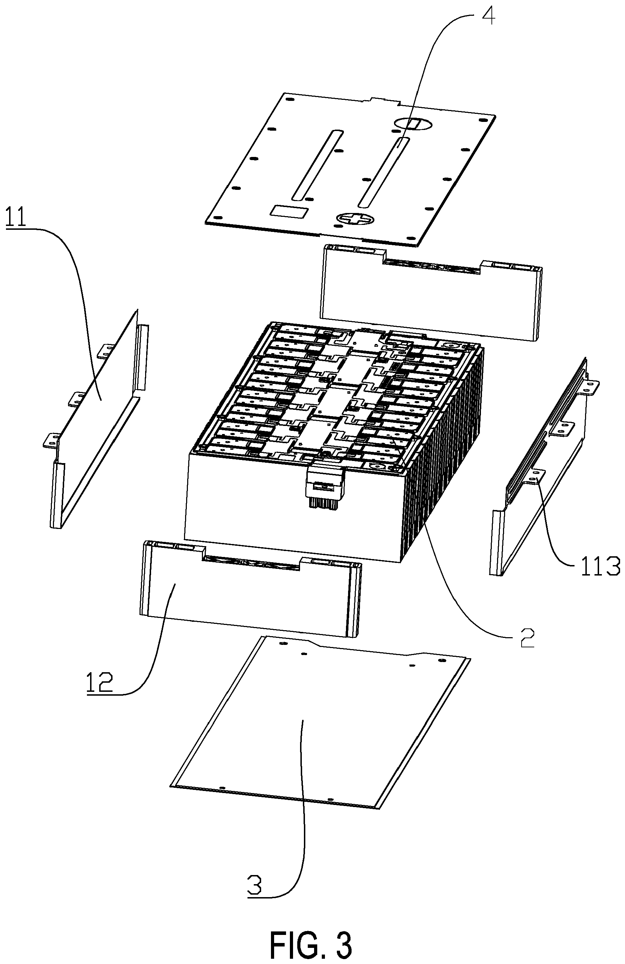

With reference to FIG. 2 and FIG. 3, this embodiment provides a battery module including a casing 1, a cell assembly 2, a liquid cooling plate 3, and a cover plate 4. The cell assembly 2 is disposed in an accommodating cavity in the casing 1. The cover plate 4 is disposed on a top portion of the casing 1 and covers the cell assembly 2. The liquid cooling plate 3 is arranged on a bottom portion of the casing 1 and is fixedly connected to the cell assembly 2.

According to the design of a conventional battery module, the casing 1 provided by this embodiment has a cuboid structure, but in actual manufacturing applications, the shape of the casing 1 may be adjusted according to needs. The casing 1 includes two side plates 11 and two end plates 12. With reference to the directions shown in FIG. 2 and FIG. 3, the two side plates 11 are arranged symmetrically on the left and right, and the two end plates 12 are arranged symmetrically in the front and rear. In a horizontal direction, both ends of one side plate 11 in a length direction are connected to one end plate 12, and both ends of one end plate 12 in the length direction are connected to one side plate 11, so that the casing 1 featuring a cuboid structure is formed. The liquid cooling plate 3 is arranged on the bottom portion of the casing 1 and is fixedly connected to the end plates 12.

In addition, this embodiment further discloses a battery pack including the abovementioned battery module and a mounting beam 5. The battery module is mounted on the mounting beam 5. In a conventional battery pack, the end plates 12 are provided with hoisting structures to hoist the battery module on the mounting beam 5. A surface of a single cell in the cell assembly 2 with the largest surface area is perpendicular to the two side plates 11. When the battery pack is pressed and collided, the side plates 11 are easily squeezed and deformed to squeeze the single cell, resulting in thermal runaway in the single cell. Therefore, this embodiment provides a side plate structure in which the hoisting structures are arranged on the side plates 11, and the strength of the side plates 11 is enhanced, so as to improve the ability of the side plates 11 to resist pressing and deformation, and the safe use of the battery module and the battery pack is thereby ensured.

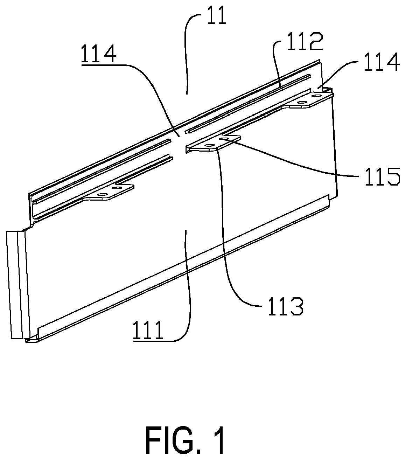

To be specific, with reference to FIG. 1, each of the side plates 11 includes a side plate body 111, a protruding rib portion, and a lifting lug 113. The protruding rib portion is disposed on an outer side surface of the side plate body 111 and extends in a length direction of the side plate body 111. A plurality of lifting lugs 113 are provided, and the lifting lugs 113 are distributed at intervals in the extending direction of the protruding rib portion. Further, each of the lifting lugs 113 protrudes from and is perpendicular to the outer side surface of the side plate body 111. Each of the lifting lugs 113 is provided with mounting holes 115 or hoisting holes, and the mounting beam 5 is provided with through holes adapted to the mounting holes 115. When the battery module is mounted in the battery pack, the mounting holes 115 are aligned up and down with the through holes, and the two are assembled and locked with bolts and nuts. The battery module is then mounted in the battery pack.

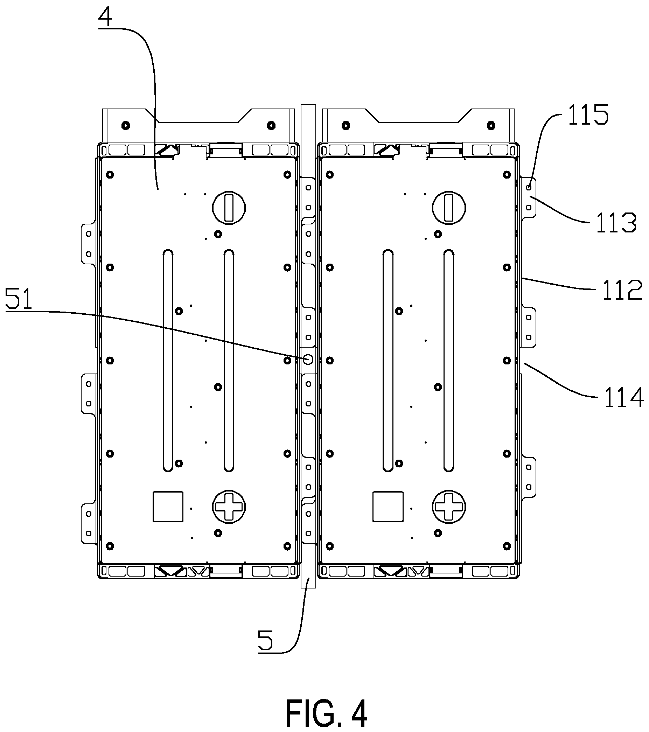

With reference to FIG. 4, if battery modules are hoisted on the left and right sides of the same mounting beam 5, the lifting lugs 113 of the left side plates 11 and the right side plates 11 of the battery modules are arranged in an alternating manner. In this way, the two battery modules may be neatly hoisted on the left and right sides of the mounting beam 5.

In order to make full use of the space in the battery pack, the two battery modules are compactly hoisted, that is, the two side plates 11 on the left and right sides of the mounting beam 5 are compactly adjacent to each other. Therefore, in the battery pack, the mounting beam 5 is arranged below the lifting lugs 113, and a vertical projection of the mounting beam 5 partially overlaps vertical projections of the protruding rib portions on the two side plates 11 on both sides of the mounting beam 5. This leads to a new problem. When the battery module is to be disassembled from the battery pack, the disassembly tool needs to be inserted into the bottom portion of the battery module to lift up the battery module. The bottom portions of the end plates 12 are fixed to the liquid cooling plate 3, so if the disassembly tool is inserted into the bottom portion of the battery module from the sides of the end plates 12, the liquid cooling plate 3 may be damaged easily. Further, the vertical projections of the protruding rib portions of the side plates 11 partially overlap the vertical projection of the mounting beam 5, so the disassembly tool cannot be inserted into the battery module from the sides of the side plates 11 either.

In order to solve the problem of disassembly, with reference to FIG. 1, the protruding rib portion of this embodiment includes a protruding rib 112 and notches 114. The protruding rib 112 and the notches 114 are adjacent to each other in the extending direction of the protruding rib portion. A total length of the protruding rib 112 and the notches 114 is equal to a length of the side plate body 111. The vertical projection of the protruding rib 112 partially overlaps the vertical projection of the mounting beam 5. The notches 114 are disposed between the side plate body 111 and the mounting beam 5. The positions of the notches 114 may be arranged according to needs and may be arranged at the end, the middle, or between the end and the middle of the protruding rib portion. The number of notches 114 may also be adjusted. For instance, with reference to FIG. 4, the middle region of the mounting beam 5 is generally provided with a hanging column 51, and the position of the notch 114 may correspond to the hanging column 51 to form avoidance. Based on the above, the notch 114 is designed to be wider, so as to avoid the hanging column 51 and at the same time accommodate the insertion of the disassembly tool, and the battery module may thus be easily and quickly disassembled. In order to ensure the stability of the hoisting of the battery module, the less the number of notches 114, the better. By arranging the notches 114 at one end of the protruding rib portion, it can ensure that the lifting lugs 113 are evenly distributed in the middle region of the protruding rib portion and can stably bear the weight of the battery module. Moreover, the notches 114 on the side plates 11 on both sides of the mounting beam 5 are arranged obliquely and symmetrically, which can ensure that the mounting beam 5 is evenly stressed.

Besides, in order to further improve the strength of the side plates 11, a plurality of protruding rib portions may be provided, and the plurality of protruding rib portions are arranged at intervals in the height direction of the side plate body 111. The vertical projection of the protruding rib 112 partially overlaps the mounting beam 5, and the distance between two adjacent protruding rib portions is generally less than the height of the mounting beam 5. Therefore, the mounting beam 5 is generally provided at the bottom portion of the lowermost protruding rib portion. In order to ensure that the mounting beam 5 is firmly assembled to the lifting lugs 113, the lifting lugs 113 are arranged on the lowermost protruding rib portion. If the lifting lugs 113 are provided on the upper protruding rib portion, the distance between the mounting beam 5 and the lifting lugs 113 is long, and it thus cannot be guaranteed that the two can be locked by bolts. Further, in order to allow the disassembly tool to be smoothly inserted, the positions of the notches 114 of the protruding rib portions are required to arranged to correspond to one another one-to-one.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery module, comprising a casing (1) and a cell assembly (2) disposed in the casing (1), wherein the casing (1) comprises two side plates (11) opposite to each other,
each of the side plates (11) comprises a side plate body (111), a protruding rib portion, and lifting lugs (113), the protruding rib portion is disposed on an outer side surface of the side plate body (111) and extends in a length direction of the side plate body (111), the protruding rib portion comprises a protruding rib (112) and a notch (114), the protruding rib (112) and the notch (114) are adjacent to each other in an extending direction of the protruding rib portion, the notch (114) is provided on at least one end of the protruding rib portion in the extending direction, and the lifting lugs (113) are disposed on the protruding rib (112) at intervals in the extending direction of the protruding rib portion.

2. The battery module according to claim 1, wherein: the notch (114) is disposed in the middle of the protruding rib portion in the extending direction.

3. The battery module according to claims 1 or 2, wherein: a plurality of the protruding rib portions are provided, the protruding rib portions are arranged at intervals in a height direction of the side plate body (111), the positions of the notches (114) of the protruding rib portions are correspondingly arranged, and the lifting lugs (113) are arranged on the protruding rib (112) of the lowermost protruding rib portion.

4. The battery module according to claim 3, wherein: each of the lifting lugs (113) is provided with mounting holes (115) and/or hoisting holes.

5. The battery module according to claim 1, wherein: the casing (1) further comprises two end plates (12) opposite to each other, and the two side plates (11) and the two end plates (12) are connected at intervals to form the casing (1) in a horizontal direction.

6. The battery module according to claim 5, wherein: the battery module further comprises a liquid cooling plate (3) and a cover plate (4), the liquid cooling plate (3) is arranged on a bottom portion of the casing (1) and is fixedly connected to the cell assembly (2), and the cover plate (4) is disposed on a top portion of the casing (1) and covers the cell assembly (2).

7. The battery module according to claim 6, wherein: the liquid cooling plate (3) and the end plates (12) are fixedly connected.

8. A battery pack, comprising the battery module according to any one of claims 1-7.

9. The battery pack according to claim 8, wherein: a mounting beam (5) is disposed inside the battery pack, and the lifting lugs (113) are fixedly connected to the mounting beam (5) to allow the battery module to be mounted in the battery pack.

10. The battery pack according to claim 9, wherein: the mounting beam (5) is arranged below the lifting lugs (113), and a vertical projection of the mounting beam (5) partially overlaps a vertical projection of the protruding rib (112).
